# EUROPÄISCHE PATENTSCHRIFT

(11) **EP 0 368 016 B1**
(45) Veröffentlichungstag und Bekanntmachung des Hinweises auf die Patenterteilung: **08.06.1994**
(21) Anmeldenummer: 89118904.5
(22) Anmeldetag: 11.10.1989
(51) Int. Cl.: B65B 51/30, B65B 9/20, B29C 65/02

(54) **Schlauchbeutelmaschine**
Tubular bag-making machine
Machine de fabrication de sachets tubulaires

(30) Priorität: 18.10.1988 DE 3835461; 07.03.1989 DE 3907208
(43) Veröffentlichungstag der Anmeldung: 16.05.1990
(60) Teilanmeldung: 92104114.1
(73) Patentinhaber: ROVEMA VERPACKUNGSMASCHINEN GMBH, 35461 Fernwald (DE)
(72) Erfinder: Keim, Dieter, D-6306 Langgöns (DE); Stein, Bernd, D-6301 Reiskirchen (DE); Lohr, Herbert, D-6301 Reiskirchen (DE); Schneider, Werner, D-6331 Hohenahr (DE); Kabot, Michael, D-6301 Pohlheim (DE); Ade, Rainer, Dr., D-6350 Bad Nauheim (DE); Baur, Walter, Dr., D-6466 Gründau (DE)
(74) Vertreter: Missling, Arne, Dipl.-Ing.

(56) Entgegenhaltungen:
- EP-A- 0 192 605
- EP-A- 0 203 572
- WO-A-88/00887
- DE-B- 1 179 854
- GB-A- 775 061
- GB-A- 2 128 543
- US-A- 3 444 732
- US-A- 3 826 701
- US-A- 4 768 327

## Beschreibung

Die Erfindung betrifft eine Schlauchbeutelmaschine mit einer Formschulter und einer Schweißvorrichtung zur Ausbildung eines Hüllstoffschlauches und mit nachgeordneten temperaturgesteuerten Quersiegelbacken, welche seitlich zu dem Hüllstoffschlauch bewegbar sind, wobei die Quersiegelbacken mittels eines Antriebsmechanismus über einen Antrieb bewegbar sind, welcher von einer Steuereinrichtung gesteuert betätigbar ist.

Es sind aus dem Stand der Technik Schlauchbeutelmaschinen bekannt, beispielsweise aus der DE-PS 35 38 723, bei welchen die Bewegung der Querschweißbacken mittels Kurvenscheiben gesteuert wird. Dabei ist insbesondere ein Kurvenscheibenpaar vorgesehen, welches direkt mit dem Paar von Querschweißbacken betriebsverbunden ist und so ausgebildet ist, daß bei einer vollständigen Drehung der Kurvenscheibe ein Arbeitszyklus der jeweiligen Querschweißbacke durchgeführt wird. Da die Form der jeweiligen Kurvenscheibe fest vorgegeben ist, ist es nicht möglich, die Bewegung der Querschweißbacke den jeweiligen Betriebsbedingungen anzupassen. Insbesondere ist es nicht möglich, die erforderlichen Siegel- oder Schweißzeiten in Abhängigkeit von der Art des Materials des Schlauchbeutels oder des Hüllstoffes, der Temperatur dieses Materials oder der Temperatur der Schweißbacken zu steuern. Weiterhin ist es nicht möglich, den jeweils erforderlichen Anpreßdruck der Querschweißbacken den Erfordernissen anzupassen. All dies führt unter ungünstigen Betriebsbedingungen dazu, daß entweder keine ausreichende Verschweißung oder Versiegelung erfolgt oder daß das Material durch die Querschweißbacken zu sehr erwärmt wird, so daß Löcher oder Fehlstellen entstehen können.

Ein weiterer Nachteil der bekannten Kurvenscheibensteuerung der Querschweißbacken liegt darin, daß die Querschweißbacken durch die von den Kurvenscheiben aufgezwungene Beschleunigung vielfach stark gegeneinanderschlagen, so daß hohe Materialbeanspruchungen auftreten. Dies hat zur Folge, daß die Querschweißbacken aus festeren Materialien gefertigt und entsprechend dimensioniert werden müssen. All dies erhöht die Herstellungskosten der Schweißbacken oder führt dazu, daß größere Massen bewegt werden müssen.

Ein weiterer Nachteil der bekannten Ausgestaltungsform einer Schlauchbeutelmaschine liegt darin, daß eine Anpassung der Bewegung der Querschweißbacken an die mögliche Taktzeit, welche sich aus dem Material des Schlauchbeutels ergibt, kaum möglich ist. Eine Erhöhung der Umfangsgeschwindigkeit bzw. der Drehzahl der Kurvenscheiben führt zwar zu einer Verkürzung oder Verlängerung des Arbeitstaktes, bedingt aber, daß bei einer entsprechenden Anpassung der Siegel- oder Schweißzeit auch die Zeiten für die restlichen Arbeitsschritte verlängert oder verkürzt werden, so daß beispielsweise eine zufriedenstellende Befüllung des Beutels nicht oder nur unter erheblichem Aufwand möglich ist.

Aus dem Artikel Bippus, Walter & Heyse, Klaus: Verfahren und Vorrichtungen zum Schweißen und Heißsiegeln von Verpackungsfolien in DE-Z.: Verpackungsrundschau, 10. Sonderausgabe Oktober 1967, S. 18 bis 36, sind die Zusammenhänge zwischen Siegeldruck, Backenzustand und Backentemperatur bekannt. Es ist dabei insbesondere angegeben, daß ein hoher Aufwand erforderlich ist, um die Temperatur der Siegelbacken mittels einer geeigneten Steuerungs- und Regelungseinrichtung möglichst konstant und gleichbleibend zuhalten. Hierzu werden Temperaturfühler verwendet, welche insbesondere die Temperaturverteilung in Längsrichtung der Siegelbacke berücksichtigen. Die hier beschriebene Vorgehensweise zielt somit darauf ab, eine möglichst gleichbleibende Temperatur der Siegelbacken dadurch zu erzielen, daß die Heizungseinrichtung in entsprechender Weise nachgeregelt wird.

Der Erfindung liegt die Aufgabe zugrunde, eine Schlauchbeutelmaschine der angegebenen Art zu schaffen, welche bei einfachem Aufbau und betriebssicherer Handhabbarkeit bei vorgegebener Nahtgüte die Nahtgüte beeinflussenden Parameter so aufeinander abstimmen, daß die Nahtgüte auch bei sich ändernden Betriebsbedingungen beibehalten werden kann.

Erfindungsgemäß wird die Aufgabe dadurch gelöst, daß der Antriebsmechanismus für jede Quersiegelbacke eine Kurvenbahn umfaßt, in welcher eine mit der Quersiegelbacke verbundene Kurvenrolle geführt ist, und daß die Kurvenbahnen auf einer Trägerscheibe ausgebildet sind, welche reversierend verschwenkbar ist.

Erfindungsgemäß ist somit die Möglichkeit geschaffen, die Querschweißbacken in Abhängigkeit der jeweiligen Betriebsparameter zu bewegen, wobei eine Anpassung nicht, wie beim Stand der Technik, einen Austausch mechanischer Teile erforderlich macht.

Der Antriebsmechanismus für jede Querschweißbacke kann eine Kurvenbahn umfassen in welcher eine mit der Querschweißbacke verbundene Kurvenrolle geführt ist, wobei die Kurvenbahnen auf einer Trägerscheibe ausgebildet sind, welche reversierend verschwenkbar ist. Bei dieser Ausgestaltung der Schlauchbeutelmaschine erweist es sich als besonders vorteilhaft, daß nur die Trägerscheibe reversierend verschwenkbar sein muß, um eine Hin- und Herbewegung der Querschweißbacken zu erzeugen, während der Hauptteil des Antriebs, insbesondere der Antriebsmotor, unabhängig von dieser Bewegung ist. Dabei ist es entweder möglich, einen normalen, umlaufenden Motor einzusetzen, welcher kostengünstig herstellbar ist und technisch einfach ausgestaltet werden kann; falls erwünscht, ist es jedoch auch möglich, die Trägerscheibe mittels eines Reversiermotors reversierend zu verschwenken. Ein weiterer Vorteil dieser Ausgestaltungsform ist dadurch gegeben, daß die Kurvenbahnen, mittels derer die Bewegungen der Querschweißbacken gesteuert werden, so ausgebildet sein können, daß ein schlagfreies Umsteuern auch bei hohen Taktfrequenzen ermöglicht wird. Weiterhin zeichnet sich diese Ausgestaltungsform dadurch aus, daß die umzusteuernden Massen relativ klein gehalten werden können. Dies führt zu einer erheblichen technischen Vereinfachung der gesamten Schlauchbeutelmaschine und gestattet es, die Taktzeiten bei hoher Betriebssicherheit und Lebensdauer der Schlauchbeutelmaschine erheblich zu verkürzen. Ein weiterer Vorteil dieser Ausgestaltungsform liegt darin, daß keine Stillstandszeiten eines Antriebsmotors erforderlich sind, da die Form der Kurvenbahnen so ausgewählt werden kann, daß bei umlaufendem Motor ein Stillstand der Querschweißbacken zur Durchführung des Siegelvorganges erfolgt. Weiterhin ist es besonders günstig, daß die Zustellung der Querschweißbacken, die Siegelzeit und/oder der Siegeldruck sowohl mechanisch durch Veränderung der Antriebsmimik als auch elektrisch durch Beeinflussung der Motordrehzahl regelbar sind.

Erfindungsgemäß erweist es sich als günstig, die Verschwenkung der Trägerscheibe mittels eines Kurbeltriebs vorzunehmen, da dann ein einfacher, um laufender Antriebsmotor verwendet werden kann. Dieser weist bevorzugterweise eine mit ihm betriebsverbundene Kurbelscheibe auf, welche über eine Stange mit der Trägerscheibe verbunden ist. Die Einstellung der Zustellbewegung der Querschweißbacken sowie der Siegelzeit kann bei dieser Ausgestaltungsform besonders einfach dadurch vorgenommen werden, daß entweder die Verbindungsstange längenveränderbar ausgebildet ist oder daß der Antriebsmotor verschwenkbar gelagert ist, um auf diese Weise die Drehachse der Kurbelscheibe zu verlagern. Die Verschwenkung des Antriebsmotors kann entweder manuell oder mittels eines Stellantriebes erfolgen. Weiterhin ist es möglich, zur Einstellung der Zustellbewegung bzw. der Siegelzeit den Antriebsmotor drehzahlregelbar auszubilden. Da erfindungsgemäß die in der Kurvenrollenbahn geführte Kurvenrolle, welche sich in fester Verbindung mit der Querschweißbacke befindet, in Abhängigkeit von einer Verschwenkung der Trägerscheibe eine Hin- und Rückbewegung der Querschweißbacke bewirkt, ist es somit möglich, die beiden Zeiten, welche für den Siegelvorgang ausschlaggebend sind, nämlich die Zeit zur Zustellung der Siegelbacken (Hub) und die Siegelzeit einzustellen. Die Aufteilung dieser beiden Zeiten erfolgt in Abhängigkeit von der Ausgangsstellung der Kurvenrolle in der geöffneten Stellung der Querschweißbacken. Die obengenannten Maßnahmen können entweder einzeln oder in Kombination verwendet werden, um eine geeignete Einstellung vorzunehmen. Zusätzlich ist es weiterhin möglich, die Siegelzeit durch eine Beeinflussung der Form der Kurvenbahn vorzubestimmen. Dabei ist es möglich, beide Kurvenbahnen, bezogen auf die Schwenkachse der Trägerscheibe punktsymetrisch auszubilden, so daß beide Querschweißbacken in gleicher Weise bewegt werden. Es ist jedoch auch möglich, die Kurvenbahnen zur Erzeugung einer jeweils unterschiedlichen Bewegung der Querschweißbacken voneinander unterschiedlich auszugestalten, beispielsweise dadurch, daß die Kurvenbahn einer ersten Querschweißbacke einen Zustellbereich und einen daran anschließenden, keine Zustellung umfassenden Siegelbereich aufweist, während die Kurvenbahn der zweiten Querschweißbacke einen Zustellbereich, einen daran anschließenden Bereich geringer Zustellung und einen nachfolgenden, keine Zustellung umfassenden Siegelbereich umfaßt. Die zweite Querschweißbacke erfährt bei dieser Ausgestaltungsform einen Überhub, um während des Siegelvorganges die Anpreßkraft aufrecht zu erhalten.

In einer weiteren, besonders günstigen Ausgestaltung der Erfindung ist vorgesehen, daß zumindest zwischen einer der Querschweißbacken und der zugeordneten Antriebseinrichtung ein einstellbares Federelement angeordnet ist, welches in Form einer mit Druckluft beaufschlagbaren Federeinrichtung (Luftfeder), einer mechanischen Feder oder auch einer hydraulischen Feder mit einem Federspeicher ausgebildet sein kann. Das Federelement ist einstellbar ausgebildet, um bei dem Überhub einer der Querschweißbacken während der Siegel- oder Schweißzeit eine ausreichende, konstante Anpreßkraft aufzubringen. Bevorzugterweise ist die Federkraft der Federeinrichtung unabhängig von der Betätigung des Antriebsmechanismus der Querschweißbacke einstellbar.

Unter Verwendung des Federelementes ist es erfindungsgemäß möglich, unter Beibehaltung aller anderen Betriebsfaktoren die Siegelzeit selbst zu beeinflussen. Falls beispielsweise eine Luftfeder verwendet wird, welche gegen eine mechanische Feder wirkt, so erfolgt während der Siegelzeit in dem Luftkolben der Aufbau eines höheren Druckes. Wird dieser zu einem bestimmten Zeitpunkt abgebaut, so bewirkt die mechanische Feder ein Zurückfahren des Kolbens und damit ein Zurückfahren der Querschweißbacke. Dies führt dazu, daß die beiden Querschweißbacken in einem Abstand zueinander angeordnet sind, so daß sich die Siegelnaht abkühlen kann, während diese noch nicht durch das Füllgut des Beutels belastet ist, welches sich gegen kühlere Bereiche der Querschweißbacken abstützen kann.

Unter Verwendung eines mit Luft betätigten Federelements ist es weiterhin möglich, den Zustellvorgang der Querschweißbacken dadurch zu überwachen, daß der Druck in der Luftfeder, beispielsweise mittels eines Sensors, überwacht wird. Sollte sich während der Zustellbewegung eine Druckerhöhung bemerkbar machen, so deutet dies darauf hin, daß die Querschweißbacken beim Zusammenfahren gegen Füllgut anliegen, wodurch die Ausbildung einer dichten Siegelnaht verhindert würde. Die Überwachung des Druckes kann somit zu Steuerungszwecken verwendet werden.

Eine weitere vorteilhafte Anwendung eines Luft-Federelements mit einstellbarem Druck im Luftkolben liegt darin, daß bei einer Störung der Produktion der Beutel, beispielsweise der Zuführung von Füllgut oder der Längsverschweißung der Folienbahn die Querschweißvorrichtung weiterbetrieben werden kann, ohne daß Mehrfachsiegelungen erfolgen. Dies kann allein dadurch erreicht werden, daß die Federspannung durch Verminderung des Luftdrucks in dem Luftzylinder verringert wird, so daß die Feder den Kolben so verstellt, daß dieser in seiner Endlage nicht gegen die gegenüberliegende Querschweißbacke gedrückt wird. Somit wird die Ausbildung einer Querschweißnaht verhindert.

Ein weiterer Vorteil der Verwendung von Kurvenbahnen zur Steuerung der Querschweißbacken liegt darin, daß bei einer Umsteuerung die Kurvenrollen in der Kurvenbahn bzw. die Kurbelscheibe nur einen relativ kleinen Hub bei einem relativ großen Verschwenkwinkel ausführen, so daß ein sehr weicher Sinusverlauf bei der Bewegung der Querschweißbacken gegeben ist. Es erfolgt somit kein schlagartiges Umschalten mit hoher Belastung der Vorrichtung. Ein weiterer Vorteil liegt darin, daß das Umsteuern schlagfrei und unter geringer Beanspruchung der Vorrichtung erfolgt, da die umzusteuernden Massen sehr gering sind. Das Gewicht des Motors, des an ihn angeflanschten Getriebes und der Kurbelstange wirkt sich hierbei bei der Umsteuerung nicht aus. Weiterhin ist es möglich, die Siegelzeit durch die bereits beschriebenen Maßnahmen bzw. eine Einstellung des Federelementes den jeweiligen Anforderungen in optimaler Weise anzupassen.

Die erfindungsgemäßen Antriebsverfahren und Antriebsausgestaltungen ermöglichen es, bei einem kurzen Weg der Querschweißbacken beim Druckaufbau eine hohe Kraft aufzubringen. Weiterhin ist es erfindungsgemäß vorteilhaft, daß nur wenige bzw. geringe bewegte Massen vorhanden sind, so daß eine materialschonende Verschweißung oder Versiegelung möglich ist.

Die erfindungsgemäße Schlauchbeutelmaschine zeichnet sich durch eine Reihe erheblicher Vorteile aus. Durch die Möglichkeit, die Bewegung der Querschweißbacken in Abhängigkeit von Verfahrensparametern zu steuern, welche während des Betriebes gemessen werden, ist es möglich, die Schlauchbeutelmaschine an wechselnde Dimensionen des Materials der Schlauchbeutel anzupassen, beispielsweise an unterschiedliche Breiten oder Dicken des Materials. Insbesondere ist es dabei möglich, die Temperatur, welche im Kontaktbereich zwischen dem Material des Schlauchbeutels und den Querschweißbacken während des Schweiß- oder Siegelvorganges vorliegt, den Anforderungen entsprechend optimal vorzuwählen. Dies verhindert beispielsweise, daß das Schlauchbeutelmaterial im Nahtbereich durch die Querschweißbacken kaltverformt und möglicherweise beschädigt wird, wodurch Undichtigkeiten im Nahtbereich auftreten können. Ein weiterer wesentlicher Vorteil der erfindungsgemäßen Schlauchbeutelmaschine liegt darin, daß es möglich ist, den Anpreßdruck den jeweiligen Erfordernissen anzupassen und hinsichtlich der jeweils zu verwendenden Schlauchbeutelmaterialien zu optimieren. Insbesondere bei verschiedenen Materialstärken oder bei Schwankungen der Materialstärke ist es somit möglich, einen sicheren und zuverlässigen Betrieb zu gewährleisten. Weiterhin ist es durch die Steuerung des Bewegungsablaufes der Querschweißbacken in Abhängigkeit vom Anpreßdruck möglich, den Anpreßdruck, ausgehend von einem beliebigen Abstand der Querschweißbacken, jeweils bis zu dem optimalen Wert aufzubauen. Es wird dabei verhindert, daß die Backen, wie beim Stand der Technik möglich, mit zu geringem oder zu großem Druck gegeneinander angepreßt werden.

Während beim Stand der Technik stets versucht wird, durch eine exakte Temperaturregelung die Temperatur der Quersiegelbacken auf einem gleichbleibenden Wert zu halten und damit eine gleichbleibende Güte der Siegelnaht zu sichern, wird bei einer erfindungsgemäß ausgebildeten Schlauchbeutelmaschine ständig die Temperatur der Siegelbacken gemessen und diese Siegelbackentemperatur als Ausgangsgröße zur Bestimmung der Siegelparameter verwendet. Dabei können Schwankungen in der Temperatur der Quersiegelbacken, welche auch bei exakter Temperaturführung bzw. -steuerung der Heizeinrichtungen der Siegelbacken nicht zu vermeiden sind, sofort zu einer Anpasssung des Siegeldruckes und der Siegelzeit herangezogen werden. Dabei ist es insbesondere von Wichtigkeit, daß nicht nur die Siegelzeit, welche direkt von der Siegeltemperatur abhängt, sondern auch der Siegeldruck variiert wird, um sicherzustellen, daß auch bei Dickenschwankungen des Siegelmaterials dieses immer mit einem vorgegebenen Druck beaufschlagt wird, welcher den maximal möglichen Druck in keinem Falle überschreitet. Somit wird gewährleistet, daß auch bei Änderungen der Dicke der zu versiegelnden Folie eine optimale Naht ausgebildet wird.

Vorteilhaft ist, daß die erforderliche Siegelzeit zur Steuerung der Bewegung der Querschweißbacken verwendbar ist. So ist es beispielsweise möglich, Temperaturänderungen der Querschweißbacken, welche zu einer Verkürzung oder Verlängerung der Siegelzeit führen können, entsprechend zu berücksichtigen. Weiterhin ist es möglich, die Siegelzeit an unterschiedliche Druckverhältnisse anzupassen, d.h. beispielsweise bei einem höheren Anpreßdruck der Querschweißbacken die Siegelzeit zu verringern. Zusätzlich ergibt sich die Möglichkeit, das Schlauchbeutelmaterial vorzuwärmen, so daß die insgesamt erforderliche Siegelzeit verkürzt werden kann.

So kann die Temperatur der Querschweißbacken ermittelt und einer Steuereinrichtung zugeführt werden. Weiterhin kann auch die Temperatur des Beutelmaterials im Bereich der Querschweißbacken ermittelt und der Steuereinrichtung zugeführt werden. Auf diese Weise ist es erfindungsgemäß möglich, Temperaturschwankungen auszugleichen, beispielsweise durch eine Änderung des Anpreßdrucks oder der Siegelzeit. Die Temperaturänderungen können sich beispielsweise bei gleichbleibendem Schlauchbeutelmaterial aus der jeweils erforderlichen Befüllungszeit des Schlauchbeutels mit den zu verpackenden Stoffen ergeben. So ist es auf besonders einfache Weise möglich, die abzufüllenden Stoffe zu ändern oder zu wechseln, ohne daß die Steuerung der Schlauchbeutelmaschine jeweils separat angepaßt werden müßte.

Um auf möglichst einfache Weise den jeweiligen Anpreßdruck der Querschweißbacken zu ermitteln, kann es günstig sein, die Leistungsaufnahme eines Antriebs der Querschweißbacken zu ermitteln und der Steuereinrichtung zuzuführen. Auf die Verwendung zusätzlicher Druckmeßdosen oder ähnlichem kann somit verzichtet werden. Dies führt zu einer wesentlichen Vereinfachung des Aufbaus der Schlauchbeutelmaschine und zu einer Reduzierung der Kosten der Querschweißbacken. Weiterhin wird mit dieser Arbeitsweise Störungserkennung betrieben, z.B. ein Lagerschaden bei höherer Reibung erkannt.

Der Verschiebeweg der Querschweißbacken kann erfindungsgemäß bevorzugterweise aus einer Winkeländerung des Antriebsmechanismus der Querschweißbacken ermittelt und der Steuereinrichtung zugeführt werden. Auf zusätzliche Wegmeßeinrichtungen kann dabei verzichtet werden.

In einer besonders günstigen Betriebsart der Schlauchbeutelmaschine umfaßt ein Betätigungszyklus einen ersten Arbeitsschritt, in welchem die Querschweißbacken voneinander entfernt sind, einen nachfolgenden zweiten Arbeitsschritt, in welchem die Querschweißbacken gegeneinander bewegt und an die zu verschweißenden Schlauchbeutel angelegt werden, einen nachfolgenden dritten Arbeitsschritt, in welchem die Querschweißbacken gegeneinander gepreßt werden, und einen vierten Arbeitsschritt, in welchem die Querschweißbacken voneinander getrennt werden. Es ist somit möglich, den Betätigungszyklus der Querschweißbacken in einzelne Arbeitsschritte zu unterteilen, welche unabhängig voneinander steuerbar sind. Daraus ergibt sich unter anderem der Vorteil, daß eine variable Vorwärmzeit, eine variable Siegel- oder Schweißzeit sowie, falls erforderlich, eine variable Nachwärmzeit vorgesehen werden kann. Weiterhin ist es möglich, die Backengeschwindigkeit in allen Bewegungsphasen des Betätigungszyklusses beliebig zu variieren, so daß beispielsweise eine Beschleunigung, eine gleichförmige Bewegung, eine Verzögerung und ein Stillstand der Querschweißbacken angepaßt an die jeweiligen Betriebsbedingungen vorgenommen werden können.

Ein weiterer Vorteil der Erfindung ergibt sich daraus, daß der Hub der Querschweißbacken ohne eine Veränderung mechanischer Bauteile, wie dies beim Stand der Technik erforderlich ist, variiert werden kann.

Es ist günstig, wenn im zweiten Arbeitsschritt Querschweißbacken in Abhängigkeit von der Dicke des Materials des Schlauchbeutels gegeneinander bewegt werden. Es wird somit verhindert, daß bei einem dickeren Schlauchbeutelmaterial die Querschweißbacken das Material quetschen und/oder beschädigen.

Eine besonders vorteilhafte Betriebsweise der Schlauchbeutelmaschine ist dadurch gegeben, daß vor oder zu Beginn des zweiten Arbeitsschritts die Querschweißbacken zur Erwärmung des Schlauchbeutels in einem Abstand zur Oberfläche des Schlauchbeutels gehalten werden. Es ist somit möglich, die eigentliche Schweiß- oder Siegelzeit erheblich zu verkürzen, da das Material des Schlauchbeutels sich bereits in einem vorgewärmten Zustand befindet. Auch wird bei der anschließenden Warmverformung das Hüllstoffmaterial schonender verschweißt. Selbst bei Einsatz von Schweißwerkstoffen mit profilierten Siegelflächen sind Rißbildungen in Aluminiumverbandfolien sehr unwahrscheinlich. Weiterhin ist es möglich, die Querschweißbacken zur Nachheizung der Schweißstelle in einem geringfügigen Abstand voneinander zu halten. Durch diese Nachwärmung ist es möglich, eine gleichmäßige Ausbildung der Schweißnaht sicherzustellen, wobei insbesondere Verwerfungen oder Spannungen in der Schweißnaht verhindert werden können. Durch die Möglichkeit, den Abstand zwischen den Querschweißbacken und dem Schlauchbeutelmaterial während der Vor- oder Nachwärmzeit variabel einzustellen, ist es möglich, die Vorwärmung oder Nachheizung exakt den jeweiligen Anforderungen anzupassen.

Bei einer erfindungsgemäßen Schlauchbeutelmaschine liegt eine geringere mechanischen Belastung sowohl der Querschweißbacken als auch des Materials des Schlauchbeutels vor, und es ist möglich, sämtliche Bewegungsabläufe, d. h. den gesamten Betätigungszyklus in den einzelnen Arbeitsschritten beliebig zu variieren und den jeweiligen Anforderungen anzupassen. Ein weiterer wesentlicher Vorteil ergibt sich daraus, daß es möglich ist, den Druck der Querschweißbacken auf das Material des Schlauchbeutels exakt zu steuern. Es ist somit möglich, sowohl den Druckaufbau als auch den Druckabbau im einzelnen anzupassen. Die Stellung, welche die Querschweißbacken während des Vorwärmens einzunehmen haben, d. h. der Abstand zwischen dem Schlauchbeutelmaterial und den Querschweißbacken, kann in Abhängigkeit von der Dicke des Schlauchbeutelmaterials bzw. des Folienmaterials und als Funktion der Druckaufbauzeit festgelegt werden.

Im folgenden wird die Erfindung anhand eines Ausführungsbeispiels in Verbindung mit der Zeichnung beschrieben. Dabei zeigt:
- Fig. 1: eine schematische Darstellung der erfindungswesentlichen Bauteile eines Ausführungsbeispiels einer Schlauchbeutelmaschine;
- Fig. 2: ein Diagramm, welches den zeitlichen Ablauf eines Betätigungszyklusses der Querschweißbacken darstellt;
- Fig. 3: eine schematische Darstellung einer Schlauchbeutelmaschine; und
- Fig. 4: eine schematisierte Ansicht eines Ausführungsbeispiels einer erfindungsgemäßen Antriebseinrichtung für die Schweißbacken.

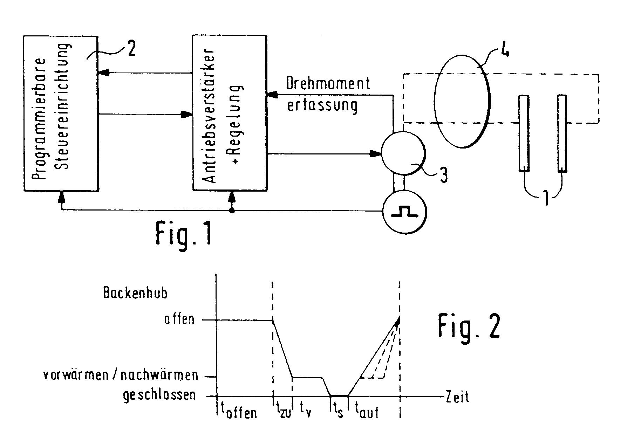

In Fig. 1 ist eine schematische Anordnung der erfindungsgemäßen Schlauchbeutelmaschine dargestellt, wobei lediglich die funktionswesentlichen Teile und Baugruppen abgebildet sind. Mit des Bezugszeichen 1 ist schematisch ein Paar von Querschweißbacken dargestellt, welche, wie nachfolgend noch beschrieben wird, relativ zueinander bewegbar sind, um in Anlage gegen einen Folienschlauch gebracht zu werden. Im Bereich der Querschweißbacken 1 ist ein Antriebsmechanismus 4 vorgesehen, welcher in Fig. 1 nur schematisch dargestellt ist und welcher von einem Antrieb 3 (Motor) antreibbar ist. An dem Antrieb 3 ist ein im einzelnen nicht dargestellter Sensor vorgesehen, mittels dessen es möglich ist, das Drehmoment des Antriebs bzw. die Leistungsaufnahme des Antriebs 3 festzustellen und einer Antriebsverstärker- und Regelungseinheit zuzuführen, welche wiederum mit einer programmierbaren Steuereinrichtung verbunden ist. Es ist somit möglich, den Antrieb 3 in Abhängigkeit von vorgewählten Betriebsparametern zu betätigen. In dem gezeigten Ausführungsbeispiel ist als einer dieser Parameter das Drehmoment des Antriebs 3 vorgesehen, welches direkt zu dem Anpreßdruck der Querschweißbacken proportional ist.

In Fig. 2 ist ein Betätigungszyklus der Querschweißbacken über die Zeit dargestellt. Zu Beginn des Zyklusses befinden sich die Querschweißbacken in geöffnetem Zustand (erster Arbeitsschritt), in welchem es möglich ist, einen Folienschlauch zwischen den Querschweißbacken durchzubewegen. In einem zweiten Arbeitsschritt erfolgt ein Schließen der Querschweißbacken auf einen vorbestimmten Abstand, welcher zum Vorwärmen des zu verschweißenden oder versiegelnden Folienmaterials dient. Nach einer Haltezeit werden die Querschweißbacken in einem vierten Arbeitsschritt gegeneinandergedrückt, um auf diese Weise den Schweißvorgang im fünften Schritt durchzuführen. In einem sechsten Arbeitsschritt können nunmehr die Querschweißbacken wiederum, wie in Fig. 2 der durchgezogenen Linie dargestellt, vollständig voneinander getrennt werden. Es ist jedoch auch, wie in Fig. 2 durch die gestrichelten Linien dargestellt, möglich, die Querschweißbacken zunächst in einen Abstand zueinander zu bringen, welcher dem Vorwärmabstand oder einem anderen Abstand entspricht, um auf diese Weise ein Nachwärmen der Schweiß- oder Siegelnaht vorzunehmen. Anschließend ist es dann möglich, die Schweißbacken wiederum voneinander zu trennen.

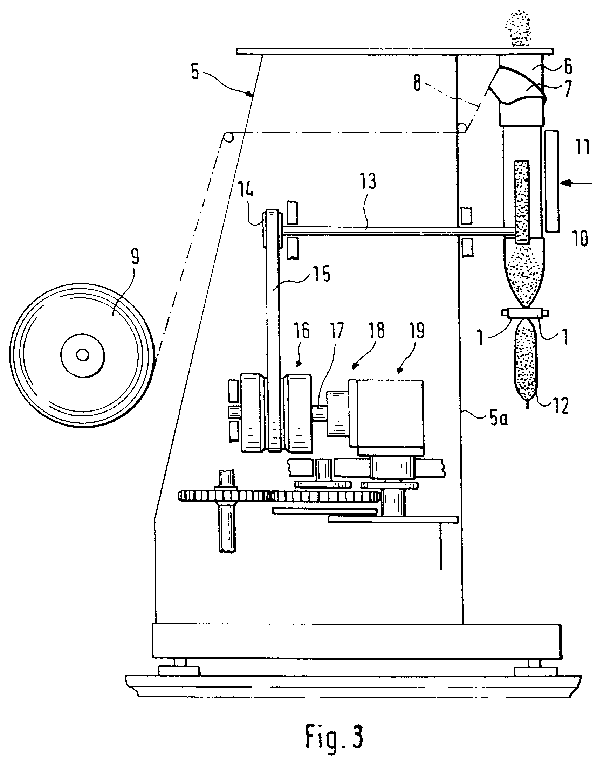

In Fig. 3 ist eine schematische Seitenansicht einer erfindungsgemäßen Schlauchbeutelmaschine dargestellt. Diese umfaßt ein als Gehäuse ausgebildetes Gestell 5, an dessen Vorderseite 5a ein vertikales Füllrohr 6 angeordnet ist. Der obere Bereich des Füllrohrs 6 ist von einer Formschulter 7 umgeben, über die eine Hüllstoffbahn 8 gelegt wird. Die Hüllstoffbahn 8 kann in Form einer Folie oder eines Netzes ausgebildet sein und wird von einer Rolle 9 abgezogen, welche im Bereich des Gehäuses 5 gelagert ist. Das Abziehen der Hüllstoffbahn 8 erfolgt mittels endloser Riemen 10, welche im Bereich des Füllrohres 6 angeordnet sind und einen großen Reibungskoeffizienten aufweisen, so daß die Hüllstoffbahn entlang des Füllrohres 6 bewegt wird.

Unterhalb der Formschulter 7 ist eine Längsschweißbacke 11 vorgesehen, welche zur Verschweißung der Hüllstoffbahnkanten dient, um somit einen endlosen Schlauch auszubilden.

Unterhalb der Längsschweißbacke 11 sind zwei Querschweißbacken 1 angeordnet, welche dazu dienen, den Hüllstoffschlauch über Quernähte in einzelne Beutel 12 zu unterteilen.

Der Antrieb der Abzugsriemen 10 erfolgt über eine Welle 13, welche mit einem Riemenrad 14 verbunden ist, über welches ein Treibriemen 15 läuft, welcher wiederum über eine Kupplung 16 geführt ist. Diese ist über eine Welle 17 mit einem Getriebe 18 und einem mit diesem betriebsverbundenen Winkelgetriebe 19 verbunden. Über eine im einzelnen nicht dargestellte Zahnradübersetzung erfolgt der Antrieb durch den in Fig. 3 nicht dargestellten Antrieb 3 (Motor).

Durch das Füllrohr 6 ist es möglich, in den Hüllstoffschlauch die abzufüllenden Stoffe einzufüllen, wobei der Einfüllvorgang im allgemeinen erst dann erfolgt, wenn die Querschweißbacken 1 sich in Anlage an dem Hüllstoffschlauch befinden und diesen abquetschen.

Erfindungsgemäß ist es möglich, oberhalb der Querschweißbacken 1 (gemäß der Darstellung von Fig. 3) zusätzliche Abdrückelemente in Form zueinander bewegbarer Elemente vorzusehen, welche dazu dienen, den Hüllstoffschlauch zu quetschen, um ein Durchfallen oder Austreten der in den Schlauch einzufüllenden Stoffe zu verhindern, während sich die Querschweißbacken in der Vorwärm- bzw. Nachwärmstellung befinden.

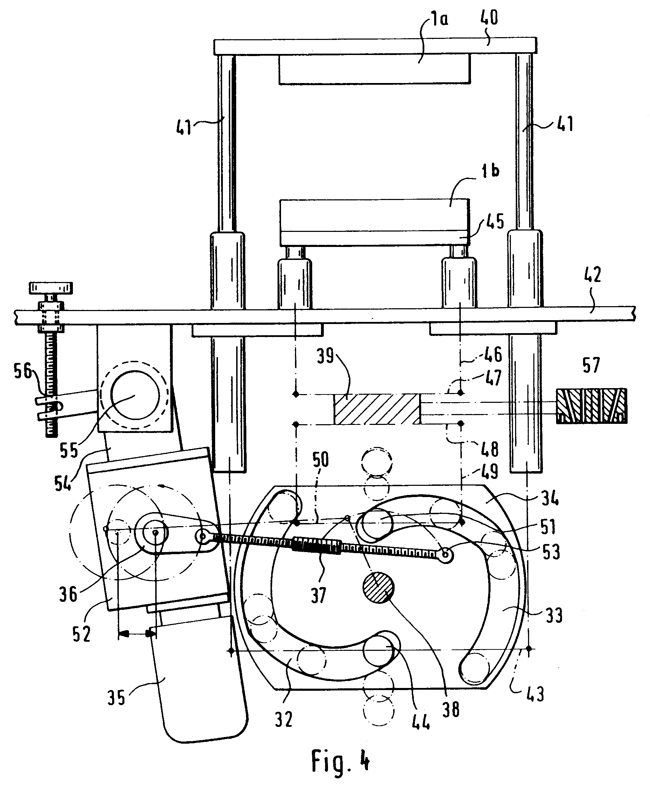

Die Fig. 4 zeigt eine schematische Darstellung eines weiteren Ausführungsbeispiels der Antriebseinrichtung der Querschweißbacken der erfindungsgemäßen Schlauchbeutelmaschine. Die Querschweißbacke 1a ist an einem Joch 40 befestigt, welches mit Führungen 41 verbunden ist, welche verschiebbar an einem Gestell 42 gelagert sind. Die freien Enden der Führungen 41 sind über einen Querträger 43 miteinander verbunden, an welchem ein Kurvenrolle 44 gelagert ist, welche beispielsweise in Form eines Kugelkopfes ausgebildet sein kann. In ähnlicher Weise ist die Querschweißbacke 1b an einem Joch 45 gelagert, welches mit Führungen 46 verbunden ist, welche ebenfalls an dem Gestell 42 verschiebbar gelagert sind. Die Führungen 46 sind an ihren freien Enden über einen Querträger 47 verbunden. Dieser wiederum ist in seinem mittleren Bereich mit einem Federelement 39, welches beispielsweise in Form einer hydraulischen, mechanischen oder Luftfeder ausgebildet sein kann, verbunden. An dem Federelement ist, gegenüberliegend dem Querträger 47 ein Querträger 48 befestigt, der mit zwei Führungen 49 verbunden ist, deren freie Enden mit einem Querträger 50 in Verbindung stehen. Dieser lagert in seinem mittigen Bereich eine Kurvenrolle 51, welche ebenfalls in Form eines Kugelkopfes ausgebildet sein kann.

Die Vorrichtung umfaßt weiterhin eine Trägerscheibe 34, an welcher zwei Kurvenbahnen 32, 33 ausgebildet sind. Die Kurvenrolle 51 ist in der Kurvenbahn 33 bewegbar, während die Kurvenrolle in der Kurvenbahn 32 geführt ist. Die Trägerscheibe 34 ist um eine Schwenkachse 38 reversierend verschwenkbar. Wie aus Fig. 6 ersichtlich ist, führt eine Verschwenkung der Trägerscheibe 34 zu einer Bewegung der Kurvenrollen 44 und 51 entlang der Kurvenbahnen 32 und 33 und somit zu einer Hin- und Herbewegung der Querschweißbacken 1a und 1b.

Eine Verschwenkung der Trägerscheibe 34 wird über einen Antriebsmotor 35 hervorgerufen, welcher mit einem Getriebe 52 verbunden ist, an dessen Ausgangswelle eine Kurbelscheibe 36 angeflanscht ist. Diese befindet sich in Schwenkverbindung mit einer Stange 37, welche längenveränderbar ausgebildet ist und bei 53 verschwenkbar an der Trägerscheibe 34 gelagert ist. Bei einer Drehung der Kurbelscheibe 36 wird somit eine Hin- und Herbewegung der Trägerscheibe 34 hervorgerufen.

Der Antriebsmotor 35 ist mittels einer Lagerplatte 54 so an dem Gestell 42 gelagert, daß eine Verschwenkung um eine Schwenkachse 55 möglich ist. Die Verschwenkung des Antriebsmotors 35 um die Schwenkachse 55 erfolgt bei den gezeigten Ausführungsbeispielen mittels eines Verstellmechanismus 56, welcher manuell betätigbar ist. Es ist jedoch auch möglich, einen elektrischen oder hydraulischen Stellantrieb vorzusehen. Durch die Verschwenkung des Antriebsmotors 35 kann, wie in Fig. 4 gezeigt, die Bewegung der Trägerscheibe 34 um die feststehende Schwenkachse 38 verändert werden, um die Siegelzeit bzw. die Zustellzeit der Querschweißbacken 1a, 1b zu verändern, so wie dies auch durch eine Längenveränderung der Stange 37 möglich ist.

Das Federelement 39 ist, wie in Fig. 4 schematisch gezeigt, mit einem Mehrwegeventil 57 betriebsverbunden und kann, beispielsweise bei Ausbildung als Luftfeder, den jeweiligen Anforderungen gemäß mit Druckluft beaufschlagt werden, um auf diese Weise den Anpreßdruck der Querschweißbacke 1b aufrecht zu erhalten oder abzubauen.

In Fig. 4 sind die einzelnen Schwenkzustände der Trägerscheibe 34 und die Lagen der Kurvenrollen 51 und 44 in Abhängigkeit von den jeweiligen Schwenkwinkeln dargestellt.

## Patentansprüche

1. Schlauchbeutelmaschine mit einer Formschulter und einer Schweißvorrichtung zur Ausbildung eines Hüllstoffschlauches und mit nachgeordneten temperaturgesteuerten Quersiegelbacken (1), welche seitlich zu dem Hüllstoffschlauch bewegbar sind, wobei die Quersiegelbacken (1) mittels eines Antriebsmechanismus (4) über einen Antrieb bewegbar sind, welcher von einer Steuereinrichtung (2) gesteuert betätigbar ist, dadurch gekennzeichnet, daß der Antriebsmechanismus für jede Quersiegelbacke (1) eine Kurvenbahn (32, 33) umfaßt, in welcher eine mit der Quersiegelbacke (1a, 1b) verbundene Kurvenrolle (44, 51) geführt ist, und daß die Kurvenbahnen (32, 33) auf einer Trägerscheibe (34) ausgebildet sind, welche reversierend verschwenkbar ist.

2. Schlauchbeutelmaschine nach Anspruch 1, dadurch gekennzeichnet, daß die Verschwenkung der Trägerscheibe (34) mittels eines Kurbeltriebs erfolgt.

3. Schlauchbeutelmaschine nach Anspruch 2, dadurch gekennzeichnet, daß der Kurbeltrieb einen Antriebsmotor (35) umfaßt, mit welchem eine Kurbelscheibe (36) verbunden ist, welche über eine Stange (37) mit der Trägerscheibe (34) betriebsverbunden ist.

4. Schlauchbeutelmaschine nach Anspruch 3, dadurch gekennzeichnet, daß die Stange (37) zur Einstellung der Zustellung der Quersiegelbacken (1a, 1b) und der Siegelzeit längenveränderbar ausgebildet ist.

5. Schlauchbeutelmaschine nach Anspruch 3 oder 4, dadurch gekennzeichnet, daß der Antriebsmotor (35) zur Einstellung der Zustellung der Quersiegelbacken (1a, 1b) und der Siegelzeit verschwenkbar ist.

6. Schlauchbeutelmaschine nach Anspruch 5, dadurch gekennzeichnet, daß die Verstellung manuell oder mittels eines Stellantriebs erfolgt.

7. Schlauchbeutelmaschine nach einem der Ansprüche 3 bis 7, dadurch gekennzeichnet, daß der Antriebsmotor (35) zur Einstellung der Zustellung der Quersiegelbacken (1a, 1b) und der Siegelzeit drehzahlregelbar ausgebildet ist.

8. Schlauchbeutelmaschine nach einem der Ansprüche 1 bis 7, dadurch gekennzeichnet, daß die Kurvenbahnen (32, 33) der Trägerscheibe (34) im wesentlichen, bezogen auf die Schwenkachse (38) der Trägerscheibe (34) punktsymmetrisch ausgebildet sind.

9. Schlauchbeutelmaschine nach einem der Ansprüche 1 bis 7, dadurch gekennzeichnet, daß die Kurvenbahnen (32, 33) der Trägerscheibe (34) zur Erzeugung einer jeweils unterschiedlichen Bewegung der Quersiegelbacken (1a, 1b) unterschiedlich ausgebildet sind.

10. Schlauchbeutelmaschine nach Anspruch 9, dadurch gekennzeichnet, daß die Kurvenbahn (32) einer ersten Quersiegelbacke (1a) einen Zustellbereich und einen daran anschließenden, keine Zustellung umfassenden Siegelbereich aufweist und daß die Kurvenbahn (33) der zweiten Quersiegelbacke (1b) einen Zustellbereich, einen daran anschließenden Bereich geringer Zustellung und einen nachfolgenden, keine Zustellung umfassenden Siegelbereich aufweist.

11. Schlauchbeutelmaschine nach einem der Ansprüche 1 bis 10, dadurch gekennzeichnet, daß zumindest zwischen einer der Quersiegelbacken (1b) und der zugeordneten Antriebseinrichtung ein einstellbares Federelement (39) angeordnet ist.

12. Schlauchbeutelmaschine nach Anspruch 11, dadurch gekennzeichnet, daß das Federelement (39) in Form einer mit Druckluft beaufschlagbaren Federeinrichtung ausgebildet ist.

13. Schlauchbeutelmaschine nach Anspruch 12, dadurch gekennzeichnet, daß der Druck der Federeinrichtung unabhängig von der Betätigung des Antriebsmechanismus der Quersiegelbacke (1b) einstellbar ist.

14. Schlauchbeutelmaschine nach Anspruch 12 oder 13, dadurch gekennzeichnet, daß die Federeinrichtung einen Sensor zur Überwachung des Luftdrucks umfaßt, welcher mit der Steuereinrichtung (2) betriebsverbunden ist.

15. Schlauchbeutelmaschine nach einem der Ansprüche 1 bis 14, dadurch gekennzeichnet, daß im Bereich des Antriebsmechanismus der Querschweißbacken (1) ein Sensor zur Ermittlung des Verschiebewegs der Querschweißbacken (1) angeordnet ist.

16. Schlauchbeutelmaschine nach einem der Ansprüche 1 bis 15, dadurch gekennzeichnet, daß im Bereich des Antriebsmechanismus der Quersiegelbacke (1) ein Sensor zur Ermittlung der Energieaufnahme des Antriebs vorgesehen ist.

17. Schlauchbeutelmaschine nach einem der Ansprüche 1 bis 16, dadurch gekennzeichnet, daß vor den Quersiegelbacken (1) Andrückelemente zum Quetschen des Beutels oberhalb der Quersiegelbacken angeordnet sind.

## Claims

1. A tubular bag-forming machine, with a shaping shoulder and a welding device for forming a tube of wrapping material and with temperature-controlled transverse sealing jaws (1) arranged downstream and movable laterally of the tube of wrapping material, wherein the transverse sealing jaws (1) are movable by means of a driving mechanism (4) by way of a drive actuable in a controlled manner by a control device (2), **characterized in that** the driving mechanism for each transverse sealing jaw (1) comprises a curved path (32, 33), in which a curve roller (44, 51) connected to the transverse sealing jaw (1a, 1b) is guided respectively, and the curved paths (32, 33) are formed on a support disc (34) which is pivotable in a reversing manner.

2. A tubular bag-forming machine according to claim 1, **characterized in that** the support disc (34) is pivoted by means of a crank mechanism.

3. A tubular bag-forming machine according to Claim 2, **characterized in that** the crank mechanism comprises a drive motor (35) to which a crank disc (36) is connected, the crank disc (36) being connected in a driving manner to the support disc (34) by way of a rod (37).

4. A tubular bag-forming machine according to Claim 3, **characterized in that** the rod (37) for setting the advance of the transverse sealing jaws (1a, 1b) and the sealing time is made longitudinally adjustable.

5. A tubular bag-forming machine according to Claim 3 or 4, **characterized in that** the drive motor (35) for setting the advance of the transverse sealing jaws (1a, 1b) and the sealing time is pivotable.

6. A tubular bag-forming machine according to Claim 5, **characterized in that** the adjustment is performed manually or by means of an actuating drive.

7. A tubular bag-forming machine according to one of Claims 3 to 7 [*sic*], **characterized in that** the drive motor (35) for setting the advance of the transverse sealing jaws (1a, 1b) and the sealing time is made controllable as a function of rotational speed.

8. A tubular bag-forming machine according to one of Claims 1 to 7, **characterized in that** the curved paths (32, 33) of the support disc (34) is made essentially centrally symmetrical with respect to the pivot axis (38) of the support disc (34).

9. A tubular bag-forming machine according to one of Claims 1 to 7, **characterized in that** the curved paths (32, 33) of the support disc (34) are designed differently in order to produce a respectively different movement of the transverse sealing jaws (1a, 1b).

10. A tubular bag-forming machine according to Claim 9, **characterized in that** the curved path (32) of a first transverse sealing jaw (1a) has an advancing area and a sealing area adjacent thereto and not including any advance, and the curved path (33) of the second transverse sealing jaw (1b) has an advancing area, a sealing area adjacent thereto of little advance and a following sealing area not including any advance.

11. A tubular bag-forming machine according to one of Claims 1 to 10, **characterized in that** an adjustable spring element (39) is arranged at least between one of the transverse sealing jaws (1b) and the associated driving device.

12. A tubular bag-forming machine according to claim 11, **characterized in that** the spring element (39) is constructed in the form of a spring device which can be acted upon with compressed air.

13. A tubular bag-forming machine according to Claim 12, **characterized in that** the pressure of the spring device can be set independently of the actuation of the driving mechanism of the transverse sealing jaw (1b).

14. A tubular bag-forming machine according to Claim 12 or 13, **characterized in that** the spring device comprises a sensor for monitoring the air pressure, which is operatively connected to the control device (2).

15. A tubular bag-forming machine according to one of claims 1 to 14, **characterized in that** a sensor for determining the displacement path of the transverse welding jaws (1) is arranged in the region of the driving mechanism of the transverse sealing jaws (1).

16. A tubular bag-forming machine according to one of Claims 1 to 15, **characterized in that** a sensor for determining the energy absorption of the drive is provided in the region of the the transverse sealing jaw (1).

17. A tubular bag-forming machine according to one of Claims 1 to 16, **characterized in that** pressure elements for squeezing the bag above the transverse sealing jaws (1) are arranged in front of the transverse sealing jaws.

## Revendications

1. Ensacheuse de sachets tubulaires, avec un collier de formage et un dispositif de soudage pour former un tube de matériau de gainage, et avec des mâchoires consécutives (1) de scellement transversal, commandées en fonction de la température, qui peuvent être latéralement déplacées vers le tube de matériau de gainage, au moyen d'un mécanisme d'entraînement (4), qui peut être actionné sous la commande d'un dispositif de commande (2), **caractérisée** en ce que le mécanisme d'entraînement comprend, pour chaque mâchoire (1) de scellement transversal, une piste de came (32, 33) dans laquelle est guidé un galet de came (44, 51) relié à la mâchoire respective (1a, 1b) de scellement transversal, et en ce que les pistes de came (32, 33) sont conformées sur un disque porteur (34) qui peut être pivoté de façon réversible.

2. Ensacheuse de sachets tubulaires selon la revendication 1, **caractérisée** en ce que le disque porteur (34) est pivoté au moyen d'un mécanisme bielle-manivelle.

3. Ensacheuse de sachets tubulaires selon la revendication 2, **caractérisée** en ce que le mécanisme bielle-manivelle comprend un moteur d'entraînement (35), auquel est relié un bras de manivelle (36) qui est opérationnellement relié au disque porteur (34) par une bielle (37).

4. Ensacheuse de sachets tubulaires selon la revendication 3, **caractérisée** en ce que la bielle (37) est conçue de longueur modifiable afin de régler l'avance des mâchoires (1a, 1b) de scellement transversal et le temps de scellement.

5. Ensacheuse de sachets tubulaires selon la revendication 3 ou 4, **caractérisée** en ce que le moteur d'entraînement (35) peut être pivoté afin de régler l'avance des mâchoires (1a, 1b) de scellement transversal et le temps de scellement.

6. Ensacheuse de sachets tubulaires selon la revendication 5, **caractérisée** en ce que le réglage s'effectue manuellement ou au moyen d'un servomoteur.

7. Ensacheuse de sachets tubulaires selon l'une quelconque des revendications 3 à 6, **caractérisée** en ce que le moteur d'entraînement (35) est conçu à régime réglable afin de régler l'avance des mâchoires (1a, 1b) de scellement transversal et le temps de scellement.

8. Ensacheuse de sachets tubulaires selon l'une quelconque des revendications 1 à 7, **caractérisée** en ce que les pistes de came (32, 33) du disque porteur (34) sont conformées sensiblement à symétrie ponctuelle par rapport à l'axe de pivotement (38) du disque porteur (34).

9. Ensacheuse de sachets tubulaires selon l'une quelconque des revendications 1 à 7, **caractérisée** en ce que les pistes de came (32, 33) du disque porteur (34) sont différemment conformées, afin de produire un mouvement respectif différent des mâchoires (1a, 1b) de scellement transversal.

10. Ensacheuse de sachets tubulaires selon la revendication 9, **caractérisée** en ce que la piste de came (32) d'une première mâchoire (1a) de scellement transversal présente une zone d'avance à laquelle se raccorde une zone de scellement ne comprenant pas d'avance, et en ce que la piste de came (33) de la seconde mâchoire (1b) de scellement transversal présente une zone d'avance, à laquelle se raccorde une zone d'avance réduite puis une zone de scellement ne comprenant pas d'avance.

11. Ensacheuse de sachets tubulaires selon l'une quelconque des revendications 1 à 10, **caractérisée** en ce qu'un élément de ressort réglable (39) est disposé au moins entre une (1b) des mâchoires de scellement transversal et le mécanisme d'entraînement associé.

12. Ensacheuse de sachets tubulaires selon la revendication 11, **caractérisée** en ce que l'élément de ressort (39) est réalisé sous la forme d'un ressort pneumatique pouvant être alimenté en air comprimé.

13. Ensacheuse de sachets tubulaires selon la revendication 12, **caractérisée** en ce que la pression dudit ressort peut être réglée indépendamment de l'actionnement du mécanisme d'entraînement de la mâchoire (1b) de scellement transversal

14. Ensacheuse de sachets tubulaires selon la revendication 12 ou 13, **caractérisée** en ce que ledit ressort comprend un capteur pour surveiller la pression d'air, capteur qui est opérationnellement relié au dispositif de commande (2).

15. Ensacheuse de sachets tubulaires selon l'une quelconque des revendications 1 à 14, **caractérisée** en ce qu'un capteur pour déterminer la course de déplacement des mâchoires (1) de scellement transversal est disposé dans la région du mécanisme d'entraînement desdites mâchoires (1).

16. Ensacheuse de sachets tubulaires selon l'une quelconque des revendications 1 à 15, **caractérisée** en ce qu'un capteur pour déterminer l'absorption d'énergie du dispositif d'entraînement est disposé dans la région du mécanisme d'entraînement des mâchoires (1) de scellement transversal.

17. Ensacheuse de sachets tubulaires selon l'une quelconque des revendications 1 à 16, **caractérisée** en ce que des éléments de pression sont disposés avant les mâchoires (1) de scellement transversal pour pincer le sachet au-dessus desdites mâchoires.
